**Europäisches Patentamt**

**European Patent Office**

**Office européen des brevets**

(19)

(11) Numéro de publication : **0 570 248 A1**

(12) # DEMANDE DE BREVET EUROPEEN

(21) Numéro de dépôt : **93400920.0**

(22) Date de dépôt : **08.04.93**

(51) Int. Cl.⁵ : **F16K 17/196,** F17C 5/06

(30) Priorité : **10.04.92 FR 9204410**

(43) Date de publication de la demande :
**18.11.93 Bulletin 93/46**

(84) Etats contractants désignés :
**AT BE CH DE DK ES FR GB GR IE IT LI LU MC NL PT SE**

(71) Demandeur : **CLINIQUE DE LA RESIDENCE DU PARC**
**Rue Gaston Berger**
**F-13010 Marseille (FR)**

(72) Inventeur : **Bagnoli, Yves, 255 Boulevard Romain Rolland**
**Bat.27, Allée de la Sauvagère**
**F-13010 Marseille (FR)**

(74) Mandataire : **Martin, Jean-Jacques et al**
**Cabinet REGIMBEAU 26, Avenue Kléber**
**F-75116 Paris (FR)**

(54) **Vanne servocommandée pour l'alimentation en fluide d'une enceinte sous pression.**

(57)   Vanne servocommandée (100) destinée à commander automatiquement l'alimentation en fluide d'une enceinte (200) sous pression.

Selon l'invention, ladite vanne comprend une entrée (A) de fluide sous une pression maximale $P_o$ donnée ; une sortie (B) de fluide vers ladite enceinte ; un clapet (110), disposé entre ladite entrée et ladite sortie, commandé par un moyen élastique (111) apte à maintenir fermé ledit clapet jusqu'à une pression $P_1$ au moins égale à ladite pression maximale $P_o$ ; une membrane élastique (130) solidaire dudit clapet par une première face (131) ; des moyens (C) de communication de ladite première face de la membrane avec la pression P à l'intérieur de ladite enceinte (200), tandis qu'une deuxième face (132) de la membrane, opposée à la première, communique avec la pression atmosphérique Patm, la membrane ayant une surface (S) telle que pour une différence de pression P-Patm donnée, ladite membrane dégage ledit clapet en s'opposant audit moyen élastique.

FIG.1

EP 0 570 248 A1

La présente invention concerne une vanne servocommandée destinée à commander automatiquement l'alimentation en fluide d'une enceinte sous pression.

L'invention trouve une application particulièrement avantageuse dans le domaine de la ventilation et la pressurisation d'enceintes sous pression telles que les caissons hyperbares.

Conformément à la loi, le taux d'oxygène dans l'enceinte des caissons hyperbares utilisés en médecine ne doit pas excéder 25 %. Pour cela il est nécessaire de ventiler dès la pressurisation. De façon pratique, les caissons hyperbares sont d'abord pressurisés à l'aide d'un circuit prévu à cet effet. Actuellement, les possibilités de ventilation existantes sont, soit manuelles en manoeuvrant simultanément une vanne d'échappement et d'admission, soit semi-automatiques lorsque la pression de consigne est atteinte en manoeuvrant une vanne d'échappement.

La mise en oeuvre de tels caissons hyperbares présente toutefois un certain nombre d'inconvénients. D'une part, la pressurisation étant réalisée en l'absence de toute ventilation, l'augmentation de la pression à l'intérieur du caisson s'accompagne d'une élévation sensible de la température, laquelle peut dépasser trente degrés, valeur que beaucoup de personnes ont des difficultés à supporter. D'autre part, le taux d'oxygène augmentant rapidement, il est nécessaire de brasser un important volume d'air afin d'essayer de maintenir la concentration de 25 % autorisée. Enfin, il convient de signaler que la mise en service et l'arrêt du système de ventilation exigent une intervention manuelle du personnel chargé du fonctionnement du caisson.

Aussi, le but de la présente invention est de proposer une vanne servocommandée destinée à commander automatiquement l'alimentation en fluide d'une enceinte sous pression, qui permettrait de mettre ladite enceinte sous ventilation dès le début de l'opération de pressurisation, donc sans augmentation de la température et de la concentration en oxygène.

Un autre but de l'invention est d'obtenir une mise en service et un arrêt de la ventilation entièrement automatiques sans qu'il soit nécessaire d'avoir recours à une quelconque manoeuvre.

Ces buts sont atteints, conformément à la présente invention, du fait que ladite vanne comprend :

- une entrée de fluide sous une pression maximale $P_o$ donnée,
- une sortie de fluide vers ladite enceinte,
- un clapet, disposé entre ladite entrée et ladite sortie, commandé par un moyen élastique apte à maintenir fermé ledit clapet jusqu'à une pression $P_1$ au moins égale à ladite pression maximale $P_o$,
- une membrane élastique solidaire dudit clapet par une première face,

- des moyens de communication de ladite première face de la membrane avec la pression P à l'intérieur de ladite enceinte, tandis qu'une deuxième face de la membrane, opposée à la première, communique avec la pression atmosphérique Patm,

la membrane ayant une surface telle que pour une différence de pression P-Patm donnée, ladite membrane dégage ledit clapet en s'opposant audit moyen élastique.

Ainsi, comme on le verra en détail plus loin, tant que la pression à l'intérieur de l'enceinte est au plus égale à la pression atmosphérique, le clapet est maintenu en position fermée sous l'action du moyen élastique et aucune circulation de fluide ne peut se produire. Par contre, dès que l'intérieur de l'enceinte est mis en surpression par rapport à la pression atmosphérique, la membrane exerce sur le clapet une force opposée à celle exercée par le moyen élastique, de sorte que, à condition d'avoir une surface suffisante, ladite membrane peut automatiquement dégager le clapet et permettre la circulation du fluide, même si la surpression est faible en comparaison de la pression developpée par le moyen élastique sur le clapet.

A l'inverse, lorsque l'enceinte est vidée, le retour à la pression atmosphérique annule la force produite par la membrane. Le clapet se referme alors de manière automatique, arrêtant ainsi la circulation du fluide.

La description qui va suivre, en regard des dessins annexés donnés à titre d'exemples non limitatifs, fera bien comprendre en quoi consiste l'invention et comment elle peut être réalisée.

La figure 1 est une vue en coupe d'une vanne servocommandée conforme à l'invention.

La figure 2 est un schéma d'un caisson hyperbare équipé de la vanne servocommandée de la figure 1.

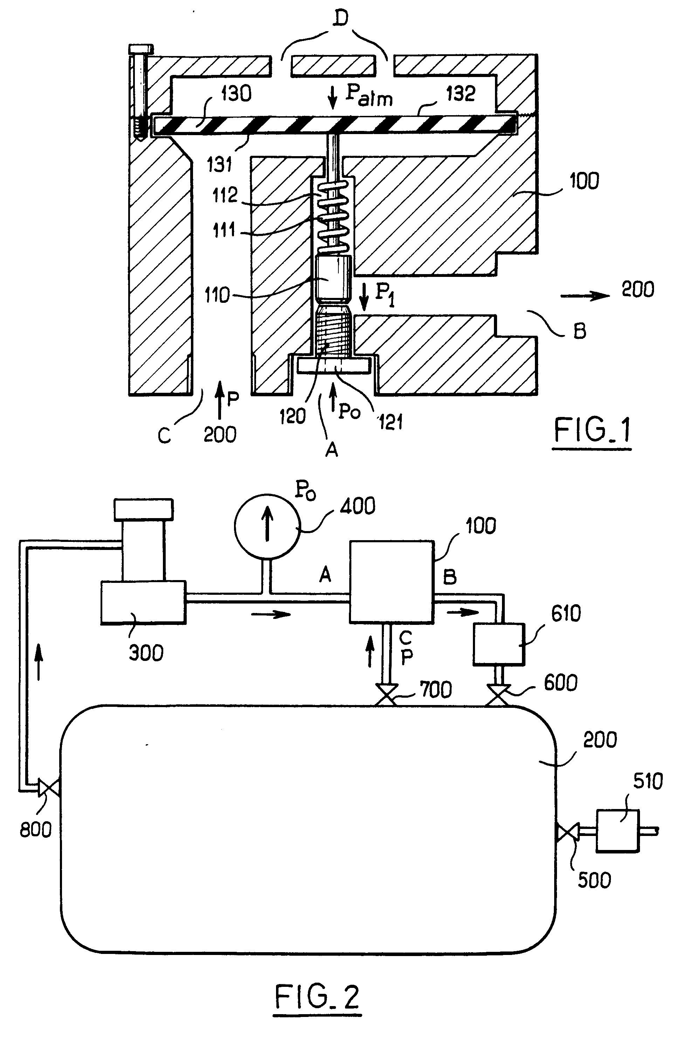

La figure 1 montre en coupe une vanne servocommandée 100 destinée à commander automatiquement l'alimentation en fluide d'une enceinte sous pression, telle qu'un caisson hyperbare 200 comme représenté à la figure 2.

Comme on peut le voir sur la figure 1, ladite vanne servocommandée 100 comprend une entrée A de fluide sous une pression $P_o$ donnée, 5 x $10^5$ Pa (5 bars) par exemple, imposée par un détendeur, non représenté sur la figure 1, ainsi qu'une sortie B de fluide vers ladite enceinte 200. On notera la présence, entre ladite entrée A et ladite sortie B de fluide, d'un clapet 110 commandé par un moyen élastique 111, ici un ressort placé dans un logement 112, apte à maintenir fermé ledit clapet jusqu'à une pression $P_1$ au moins égale à ladite pression maximale $P_o$.

On peut voir sur la figure 1 que le clapet 110 est mis en appui par le moyen élastique 111 contre un siège 120 présentant un passage 121 de section s, correspondant par exemple à un diamètre de 25 mm. L'étanchéité du siège par rapport à l'extérieur est assurée au niveau du raccordement du siège au détendeur. La force $F_1$ exercée par ledit moyen élastique doit donc être égale à $P_1$ x s, on a alors la relation :

$$P_1 = F_1/s \geqq P_o \text{ d'où } F_1 \geqq P_o \text{ x s}$$

ce qui permet de choisir la raideur du moyen élastique 111 en conséquence.

A titre d'exemple, pour une pression maximale $P_o$ de $5 \times 10^5$ Pa, la pression équivalente du moyen élastique peut être prise égale à $5,3 \times 10^5$ Pa (5,3 bars).

Comme le montre la figure 1, la vanne servocommandée 100 comprend également une membrane élastique 130 solidaire dudit clapet 110 par une première face 131. Cette première face 131 de la membrane élastique 130 est soumise à la pression P à l'intérieur de ladite enceinte 200 à l'aide de moyens C de communication représentés sur la figure 1 par un conduit reliant l'enceinte 200 à la membrane élastique 130. Il apparaît sur la figure 1 également qu'une deuxième face 132 de la membrane, opposée à la première, communique avec la pression atmosphérique Patm par l'intermédiaire d'orifices D pratiqués dans le capot de la vanne 100.

La surface S de la membrane élastique 130 est dimensionnée de façon que, pour une surpression P-Patm donnée de l'enceinte 200 par rapport à la pression atmosphérique, ladite membrane élastique 130 dégage ledit clapet 110 en s'opposant au moyen élastique 111. Pour cela, la force $F_2$ exercée par ladite membrane, de valeur (P-Patm) x S doit être supérieure à la force $F_1$ :

$$(P - Patm) \text{ x } S > (P_1 - P_o) \text{ x s}$$

soit

$$S > \frac{P_1 - P_o}{P - Patm} s$$

ce qui, pour une surpression P-Patm de $2 \times 10^3$ Pa (20 mbar), une pression $P_o$ de $5 \times 10^5$ Pa, une pression équivalente $P_1$ de $5,3 \times 10^5$ Pa et un diamètre de passage de siège de 25 mm, conduit à un diamètre d'environ 100 mm pour la membrane élastique 130. Ainsi, pour une surpression relativement faible de l'enceinte 200, la vanne servocommandée 100 de l'invention permet d'assurer une circulation de fluide malgré la force exercée par le moyen élastique 111.

Une utilisation de la vanne servocommandée représentée sur la figure 1 va être maintenant décrite en regard de la figure 2.

L'enceinte 200 considérée ici est un caisson hyperbare dont la pression de fonctionnement peut atteindre $10^7$ Pa (100 bars). L'entrée A de la vanne 100 est reliée à un détendeur 300 du type piloté. Le pilotage du détendeur 300 est relié au caisson par une vanne 800. Un manomètre 400, placé sur le trajet entre le détendeur et la vanne, indique la pression $P_o$ appliquée sur le clapet de ladite vanne. La sortie B de la vanne 100 communique avec le caisson 200 par un appareil 610 de réglage de débit et une vanne 600. Le conduit C de communication est relié au caisson par une vanne 700. Enfin, une vanne 500 d'échappement, couplée à un deuxième appareil 510 de réglage de débit, est prévue pour assurer la ventilation du caisson. Les vannes 500, 600, 700 et 800 sont ouvertes en permanence.

Avant la mise en service, les patients sont d'abord installés à l'intérieur du caisson 200 à la pression atmosphérique. Puis, une légère surpression P-Patm de $2 \times 10^3$ Pa (20 mbar) est appliquée de façon habituelle dans le but de fermer les portes autoclaves du caisson. Cette surpression est suffisante pour déclencher automatiquement la vanne servocommandée 100 qui alimente alors en fluide le caisson de manière à réaliser une ventilation continue qui démarre donc dès que le caisson est mis en surpression par rapport à la pression atmosphérique.

La circulation de fluide à travers la vanne servocommandée 100 se maintient tant que la pression à l'intérieur du caisson est supérieure à la pression atmosphérique. Elle s'arrêtera automatiquement dès que le caisson aura été totalement vidé et ramené à la pression atmosphérique.

D'autre part, la vanne servocommandée 100 peut également être utilisée pour une pressurisation automatique d'un caisson hyperbare.

Dans le cas d'une défaillance de l'un des appareils raccordés sur l'enceinte de traitement hyperbare servant à la ventilation ou la pressurisation automatique, il suffirait de fermer les vannes 500, 600, 700, 800 sans pour cela modifier la pression interne nécessaire au traitement thérapeutique. Toutefois, il faudra assurer la ventilation de façon manuelle.

## Revendications

1. Vanne servocommandée (100) destinée à commander automatiquement l'alimentation en fluide d'une enceinte (200) sous pression, caractérisée en ce que ladite vanne comprend :
    - une entrée (A) de fluide sous une pression maximale $P_o$ donnée,
    - une sortie (B) de fluide vers ladite enceinte,
    - un clapet (110), disposé entre ladite entrée (A) et ladite sortie (B), commandé par un moyen élastique (111) apte à maintenir fermé ledit clapet jusqu'à une pression $P_1$ au moins égale à ladite pression maximale $P_o$,
    - une membrane élastique (130) solidaire dudit clapet (110) par une première face (131),
    - des moyens (C) de communication de ladite première face (131) de la membrane (130) avec la pression P à l'intérieur de ladite enceinte (200), tandis qu'une deuxième face (132) de la membrane, opposée à la première, communique avec la pression atmosphérique Patm, la membrane ayant une surface (S) telle que pour une différence de pression P-Patm donnée, ladite membrane (130) dégage ledit clapet (110) en s'opposant audit moyen élastique (111).

2. Vanne servocommandée selon la revendication 1, caractérisée en ce que ledit moyen élastique (111) est un ressort.

3. Utilisation d'une vanne servocommandée selon l'une des revendications 1 ou 2 à la ventilation automatique et la pressurisation d'un caisson hyperbare (200).

FIG.1

FIG.2

Office européen
des brevets

**RAPPORT DE RECHERCHE EUROPEENNE**

Numero de la demande

EP    93 40 0920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-C-867 190 (GRATZMULLER) <br> * figure 2 * <br> --- | 1-3 | F16K 17/196 <br> F17C 5/06 |
| A | FR-A-1 400 483 (GRATZMULLER) <br> * figure 1 * <br> --- | 1-3 | |
| A | US-A-2 844 165 (MORSE) <br> * figure 1 * <br><br> ----- | 1,2 | |

**DOMAINES TECHNIQUES RECHERCHES (Int. Cl.5 )**

F16K
F17C

Le présent rapport a été établi pour toutes les revendications

| Lieu de la recherche | Date d'achèvement de la recherche | Examinateur |
|---|---|---|
| BERLIN | 14 JUIN 1993 | SCHLABBACH M. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P0402)